# EUROPEAN PATENT APPLICATION

(11) **EP 3 799 714 A1**
(43) Date of publication of application: **07.04.2021**
(21) Application number: 19812391.1
(22) Date of filing: 29.05.2019
(51) Int. Cl.: A01F 12/44

(54) **TRAY OF ANTI-VIBRATION SIEVES**

(30) Priority: 01.06.2018 ES 201830828 U
(71) Applicant: Izquierdo Puebla, Miguel Ángel, 34113 Quintanadiez de la Vega (ES)
(72) Inventor: Izquierdo Puebla, Miguel Ángel, 34113 Quintanadiez de la Vega (ES)
(74) Representative: Espiell Gomez, Ignacio
(86) International application number: PCT/ES2019/070359
(87) International publication number: WO 2019/229284

(57) **Abstract**

Tray of anti-vibration sieves, its sieving group (1) has an actuating shaft (9) on which has an inertia flywheel (19) at one end which has been modified in its length to be able to couple the said inertia flywheel weighing approx. 50kg. The sieve comprises an assembly of input worm gears (2) with the upper end thereof leading into a pre-cleaner (3) below which a series of fans (4) is located provided, in addition, with a first worm gear (5) at the final end and below the pre-cleaner (3). On the other hand, the final end of the pre-cleaner (3) by its upper face is connected with an assembly of sieves comprising an upper sieve (6) below which a lower sieve (7) is located and below this lower sieve (7) and at the most distal end thereof there is a second worm gear (8).

## Description

### OBJECT OF THE INVENTION

The object of this invention, as stated in the title, a tray of anti-vibration sieves preferably used in a harvester characterized in that it possesses a compensating shaft, that means, it refers to a sieving assembly installed within a harvester, that has as feature the fact of having the shaft compensated at the dead centers.

This invention is characterized by the shaft special configuration and drawing as well as by the fact that it possesses a compensating inertia flywheel at one of its ends.

Therefore, this invention is within the field of the cereal harvester machines with a tray of sieves.

### BACKGROUND OF THE INVENTION

Within the harvesters a sieving group is located that successively and in several steps is separating the grain from the straw having for that purpose with several sieves below which there are espective worm gears. The sieves by means of a non-stop back and forth movement allow the passage of the grain, withholding the straw.

When the harvesters connect the thresh, a belt transmits the movement to a first group, this first actuating group passes the movement to a second group which is the one providing the movement to a shaft in charge of moving the full machine cleaning system.

Generally, the said actuating shaft is not compensated at its dead centers therefore it does not operate evenly loosenesses being produced in the groups in charge of the transmission to the shaft.

The said loosenesses transmitted to the transmitting groups cause the generation of loosenesses in the transmitting groups themselves which produces unwanted tapings and vibrations produced in the rest of the parts of the sieving group, that can even degenerate in breakages of the different parts of the sieving group.

Therefore, the object of this invention aims to overcome the mentioned drawbacks of generating breakages due to tappings and vibrations communicated to the transmission groups in charge of actuating the shaft, by developing a tray of sieves harvester sieve as disclosed thereafter and that appears in its essence in the first claim.

### EXPLANATION OF THE INVENTION

The object of the invention is a harvester tray of sieves having a compensated shaft where the tray of the sieves comprises a series of input worm gears through which a set of straw and grain is lifted to fall on a pre-cleaner below which a series of fans is located that assists to a first separation of the grain from the straw, after the previous set an upper sieve is arranged below which there is a lower sieve associated at its end to a second output worm gear of the final grain.

The whole assembly of pre-cleaner and upper and lower sieves is actuated in its back-and-forth movement through a transmitting shaft that to achieve the compensation thereof possesses an inertia flywheel attached at one of its ends.

Generally, and preferably the inertia flywheel is mounted at the end opposite to the end where the shaft is connected with the actuating group.

In a possible embodiment, and in order to be able to couple the inertia flywheel on the shaft, this later is extended to a sufficient length to facilitate the coupling.

The presence of the inertia flywheel produces an automatic compensating effect at the dead centers in the movement of the transmitting shaft, which results in less loosinessess preventing the transmission to the actuating groups and therefore the fatigue and possible breakage of the rest of the parts of the sieve assembly.

Unless stated otherwise, all the technical and scientific elements used in this specification possess the meaning which is usually understood by a normal person skilled in the art to which this invention pertains. In the practice of this invention proceedings and materials similar or equivalent to those disclosed in the specification can be used.

Along the description and the claims, the word "comprises" and its variants, does not pretend to exclude other technical characteristics, additives, components or steps. For the persons skilled in the matter, other objects, advantages and characteristics of the invention are deducted in part from the description and in part from the practice of the invention.

### DESCRIPTION OF THE DRAWINGS

To complement the description that is being done and in order to assist to a best understanding of the characteristics of the invention, according to a preferred example of practical embodiment thereof, as an integral part of the said description, a set of drawing is attached, in which for illustrating and not limiting purpose the following has been represented.
In the figure 1, we can see a representation of a possible sieve of a harvester machine.
In the figure 2, a detail of the actuating shaft and inertia flywheel is shown.

### PREFERRED EMBODIMENT OF THE INVENTION

At the sight of the figures, a preferred embodiment of the proposed invention is disclosed thereafter.

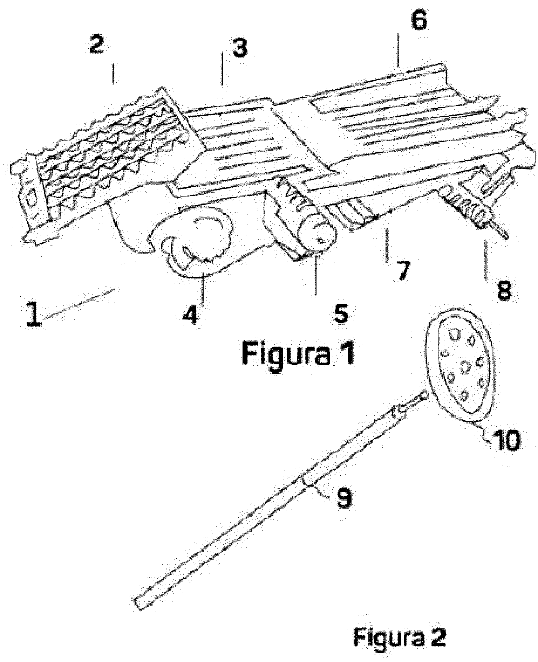

In the figure 1, we can see a harvester sieving group (1) comprising an assembly of input worm gears (2) with the upper end thereof leading into a pre-cleaner (3) below which a series of fans (4) is located that seeks to carry out a first separation of the grain from the straw. At the final end and below the pre-cleaner (3) a first worm gear (5) is located that takes out part of the grain.

The final end of the pre-cleaner (3) by its upper face connect with an assembly of sieves that comprises an upper sieve (6) below which a lower sieve (7) is arranged and below this lower sieve (7) and at the most distal end thereof a second worm gear (8) is placed.

The whole assembly of sieves is actuated by means of an actuating shaft (9) that possesses the feature of having at one end an inertia flywheel (10) that produces a compensating and reducing effect of the oscillations at the shaft (9) actuating dead centers.

The said inertia flywheel (10) is preferably mounted at the end opposite to the end 5 of connection with the actuating group and in a preferred but not limiting embodiment it could weigh 50 Kg. In order to favor inserting and fastening the inertia flywheel (10) on the end of the shaft (9), this latter can be modified having a longer length.

Thanks to the presence of this inertia flywheel a compensating effect of the actuating shaft (9) occurs preventing loosenesses that are transmitted to the actuating groups and, consequently, the number and intensity of tappings and vibrations are reduced and therefore the stresses and fatigues of the materials and consequently the generation of possible breakages.

The nature of this invention having been sufficiently disclosed, as well as the manner to implement it, it is stated that, within its essence, it can be implemented in other ways of embodiment that differ in detail of the embodiment indicated for example purpose and to which is also extended the protection that is sought, provided that it does not alter, change or modify its fundamental principle.

## Claims

1. Tray of anti-vibration sieves **characterized in that** on a sieving group (1) it has an actuating shaft (9) on which at the end of an actuating shaft (9) an inertia flywheel (10) is arranged.

2. Tray of anti-vibration sieves according to the claim 1 **characterized in that** the actuating shaft (10) has been modified along its full length to be able to couple the inertia flywheel.

3. Tray of anti-vibration sieves according to the claim 1 or 2 **characterized in that** the inertia flywheel weighs approx. 50 Kg.

4. Tray of anti-vibration sieves according to the claim 1 or 2 or 3 **characterized in that** the sieve comprises an assembly of input worm gears (2) with the upper end thereof leading into a pre-cleaner (3) below which a series of fans (4) is located having a first worm gear (5) at the final end and below the pre-cleaner (3), on the other side at the final end of the pre-cleaner (3) by its upper face it connects with an assembly of sieves that comprises an upper sieve (6) below which a lower sieve (7) is arranged and below this lower sieve (7) and at the most distal end thereof a second worm gear (8) is placed.
